# EUROPEAN PATENT SPECIFICATION

(11) **EP 0 436 964 B1**
(45) Date of publication and mention of the grant of the patent: **14.08.1996**
(21) Application number: 90125853.3
(22) Date of filing: 31.12.1990
(51) Int. Cl.: G06F 3/06, G11B 33/10, G11B 19/02

(54) **Reproducing apparatus for a disc**
Plattenabspielgerät
Appareil de reproduction pour disque

(30) Priority: 09.01.1990 JP 2149/90
(43) Date of publication of application: 17.07.1991
(73) Proprietor: SONY CORPORATION, Tokyo (JP)
(72) Inventor: Miura, Yoshihiro, c/o Sony Corporation, Shinagawa-ku, Tokyo (JP); Takagi, Koji, c/o Sony Corporation, Shinagawa-ku, Tokyo (JP); Morita, Takashi, c/o Sony Corporation, Shinagawa-ku, Tokyo (JP); Yoshii, Fumihiko, c/o Sony Corporation, Shinagawa-ku, Tokyo (JP)
(74) Representative: TER MEER - MÜLLER - STEINMEISTER & PARTNER

(56) References cited:
- EP-A- 0 149 101
- EP-A- 0 252 646
- PATENT ABSTRACTS OF JAPAN vol. 12, no. 113 (M-683)9 April 1988 & JP-A-62 241 797 (NIPPON KOKAN KK) 22 October 1987
- PATENT ABSTRACTS OF JAPAN vol. 13, no. 91 (P-837)3 March 1989 & JP-A-63 273 274 (SONY CORPORATION) 10 November 1988
- HAYES, John: Computer Architecture and Organizationn, McGraw Hill 1988, pages 152, 153, 176, 177, 506, 507, 516-523
- BAUER, Friedrich: Informatik, Springer Verlag 1974, page 55

## Description

### Background of the Invention

### Field of the Invention

This invention relates to a reproducing apparatus for a disc in which data such as letter or character data or image data read out from a disc are displayed on a display section. More particularly, it relates to a reproducing apparatus in which data retrieval and disc data reproduction control operations are executed with the use of a sole CPU.

### Description of the Related Art

A signal processing system above all, a signal processing system also adapted for performing a data retrieval, for a reproducing apparatus for a disc adapted for reading out data such as letter or character data from an optical disc using an optical pickup, reproducing and retrieving the read-out data, is constituted by two or more CPUs, such as host CPU or driving CPU, interconnected by a bus line.

With such signal processing system for the reproducing apparatus, constituted by two or more CPUs, jobs such as key input processing, display processing, data retrieval or bus line control, are taken charge of by a host CPU, whereas jobs such as servo control of the optical head, optical head feed system and disc rotating-driving means, processing of signals read out from the optical head, data correction or bus control, are taken charge of by a driving CPU. It is noted that, among the jobs executed by the drive CPU, the above mentioned servo control and signal processing are executed by a separate CPU which is connected to the drive CPU over a bus line. However, if the signal processing system for the reproducing apparatus for a disc is constituted by plural CPUs, the area occupied by the CPUs in the reproducing apparatus is increased to render it impossible to reduce the size of the reproducing apparatus.

In addition, difficulties are raised in designing the bus line interconnecting these CPUs, while the costs of the apparatus are increased through the use of plural CPUs.

EP-A-0 252 646 describes a paperless portable book adapted for use with interchangeable magnetic floppy discs, optical discs or the like, which comprises a reproducing device for reading information from the optical disc and a display for displaying said read information. A reproducing device of said paperless portable book comprises a microcomputer, an inputting instrument, a memory, and a data file processor. EP-A-0 252 646 does not give any description of how the floppy disc or the like is controlled and how the microcomputer interacts with the data file processor.

Hayes, John: Computer Architecture And Organization, McGrawhill 1988, pages 152, 153, 176, 177, 506, 507, 516 to 523 describes that data may be retrieved by controlling an IO device (e.g. disc drive) directly by a CPU. Page 507 describes that this IO principal has the advantage that it can be implemented with little special IO hardware. Further, page 507 describes that using interrupt for servicing IO devices not having a CPU of their own, is a known method.

### Object and Summary of the Invention

It is an object of the present invention to provide a reproducing apparatus for a disc in which the above mentioned problems of the conventional reproducing apparatus for a disc may be overcome and the totality of the signal processing operations in the reproducing apparatus may be made by a sole CPU.

The above object is, according to the present invention, is solved by a reproducing apparatus for a disc for retrieving data read out from the disc characterized in that a single CPU is provided which performs processings related to man-machine interface for data-processing and display as a main routine and processings for controlling the reproduction from the disc as a sub-routine by a timer interrupt (claim 1).

Depending claims 2 to 6 each are specifying an advantageous development thereof.

### Brief Description of the Drawings

Fig. 1 is a block diagram showing a signal processing system of a reproducing apparatus for a disc according to the present invention.

Fig. 2 is a perspective view showing the reproducing apparatus with the cover opened and with a cassette holder rotated to a position of insertion or removal of a disc cartridge.

Fig. 3 is a plan view of the reproducing apparatus for a disc with the cover opened to illustrate the display section and the key operating section.

Fig. 4 is a flowchart showing the main routine of a CPU constituting a signal processing system of the reproducing apparatus for a disc.

Fig. 5 is a flowchart showing a subroutine of the CPU.

### Detailed Description of Preferred Embodiments

By referring to the drawings, a preferred illustrative embodiment of the present invention will be explained in detail.

The following embodiment is concerned with a portable reproducing apparatus for a disc in which data such as characters or letters recorded on an optical disc are read out and displayed on a display section to provide the apparatus with the function of a so-called electronic dictionary.

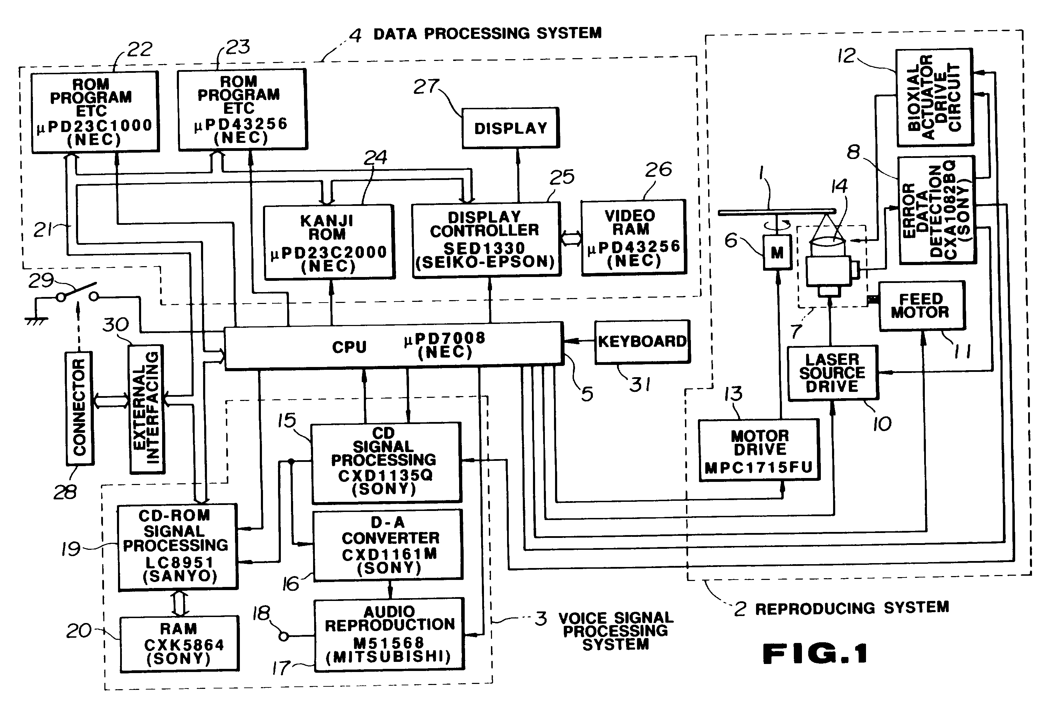

Referring to Fig. 1, the signal processing system of the reproducing apparatus for a disc according to the present invention is constituted by a reproducing system 2 for reproducing data recorded on an optical disc 1, a voice signal processing system 3 for voice signal processing of the read-out data, and a data processing system 4 for retrieving the read-out data for image display. These systems 2 to 4 are controlled by a central processing unit (CPU) 5 which will be elucidated subsequently. As CPU 5, a CPU manufactured by NEC under trade name of µPD 7008 may preferably be employed.

In the reproducing system 5, the CPU 5 is responsive to the input from a keyboard 31 to control a laser light source driving circuit 10, a thread feed motor (linear feed motor) 11, a biaxial actuator driving circuit 12 and a motor driving circuit 13. As the motor driving circuit 13, a device manufactured by Motorola Inc. under the trade name of MPC1715FU may preferably be employed. The CPU 5 controls the motor driving circuit 13 for rotationally driving a spindle motor 6 at, for example, a constant linear velocity (CLV) or at a constant angular velocity (CAV), while simultaneously controlling the thread feed motor 11 actuating an optical pickup 7 comprised of an object lens 14 constituting a biaxial device, a light source, a photodetector, a cylindrical lens or the like for roughly shifting the light spot of a laser beam to a predetermined track on the optical disc 1. The CPU also controls the biaxial actuator driving circuit 12 for shifting the object lens 14 of the pickup 7 both in the direction along the optical axis of lens for focusing control and in the direction normal to the optical axis to shift the beam spot into register with the predetermined track on the optical disc 1 for tracking control for reproducing the data recorded on the optical disc 1.

On a signal recording region of the optical disc 1, there are provided a sub-code area and a data area for each frame. Sync signals, position data and timing data are recorded in the sub-code area, while data such as character or letter data are recorded in the data area. The data signals read out from the optical disc 1 are supplied to an error detection-data detection circuit 8 to find the sum or product to detect a laser output error signal, a focusing error signal and a tracking error signal. As the error detection-data detection circuit 8, a device manufactured by Sony Corporation under the trade name of CXA1082BQ may preferably be employed. The laser output error signal is supplied to the laser light source driving circuit 10, while the focusing error signal and the tracking error signal are supplied to the biaxial actuator driving circuit 12. The laser light source driving circuit 10 controls the power of the laser light irradiated on the surface of the optical disc 1 to a constant value by the laser output error signal supplied thereto, while the biaxial actuator driving circuit 12 is responsive to the focusing error signal and the tracking error signal to shift the object lens 14 to maintain the focusing and tracking under a normal condition to provide for accurate data readout.

The signals reproduced from the optical disc 1 along with detected sync signals, timing data or the like, are supplied to a CD signal processing circuit 15 of the signal processing system 3 by way of the error detection-data detection circuit 8. As the CD signal processing circuit 15, a device manufactured by Sony Corporation under the trade name of CXD1135Q is preferably employed. To this CD signal processing circuit 15, there are supplied from CPU 5, detection signals indicating the type of a loaded optical disc, that is, whether it is an optical disc for music on which are recorded music data, or a CD-ROM, that is an optical disc on which is recorded the character information of, for example, a dictionary or an encyclopedia, in the form of character data. The CD signal processing circuit 15 separates the detection signals supplied thereto into sub-data signals such as sync signals or timing information and main data signals and, if the main data signals are voice data, transmits the voice data to a digital/analog (D/A) converter 16. As the D/A converter 16, a device manufactured by Sony Corporation under the trade name of CXD1161M, is preferably employed. The voice data signal, supplied to the D/A converter 16, is thereby converted into analog signals, which are then supplied to an audio reproducing circuit 17 so as to be outputted as voice signals at an output terminal 18. As the audio reproducing circuit 17, a device manufactured by Mitsubishi Electric Co., Ltd. under the trade name of M51568 is preferably employed. If the data signals supplied to the CD signal processing circuit 15 are the above mentioned character data signals, the CD signal processing circuit 15 transmits the character data signals or the like to a CD-ROM signal processing circuit 19. As the CD-ROM signal processing circuit 19, a device manufactured by Sanyo Electric Co., Ltd. under the trade name of LC8951 is preferably employed. The character data signals or the like, supplied to the CD-ROM signal processing circuit 19, are read out, via a random access memory (RAM) 20 functioning as a transient storage means, in dependence upon the signals supplied thereto from cpu 5. As the RAM 20, a device manufactured by Sony Corporation under the trade name of CXK5864 is preferably employed. A ROM 22 and a RAM 23, in which programs or the like are recorded, are connected to a data bus 21. As the ROM 22 and RAM 23, the devices manufactured by NEC under the trade names of µPD23C100 and µPD43256, are preferably employed, respectively. The read out character data signals or the like are transmitted over data bus 21. A display image is recorded in a video RAM 26 in accordance with Kanji Patterns read out from a Kanji ROM 24 responsive to the character data signals. The display image in video RAM 26 is read out by a display controller 25 RAM 26 is read out by a display controller 25 responsive to signals from CPU 5 so as to be displayed on a display section 27 such as a liquid crystal display (LCD). As the Kanji ROM 24 and the display controller 25, the devices manufactured by NEC under the trade names of PD23C2000 and µPD43256 are preferably employed, respectively.

It will be noted that, as soon as an external interface is connected to a connector 28, a switch 29 is turned on to reset the CPU 5, such that signal processing is performed under the instructions supplied from the interface. These instructions are processed by an external interface processing circuit 30 and the thus processed data are displayed on the display section 27 over data bus 21, as described previously.

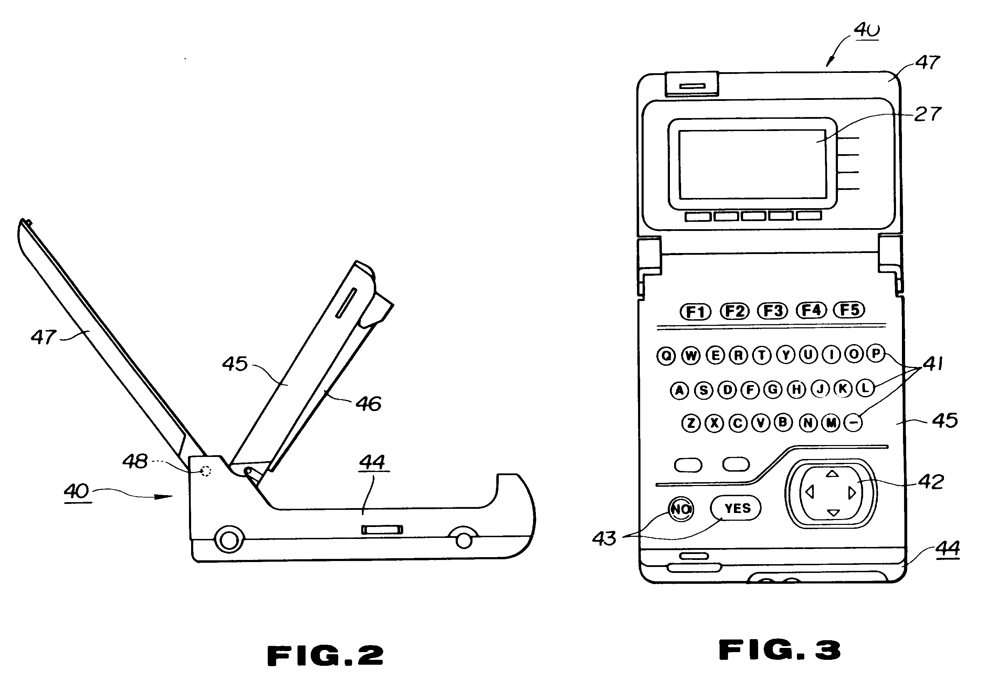

The reproducing apparatus for a disc 40, which has the function of an electronic dictionary and which is provided with the above described signal processing system, has enclosed in a main body of the apparatus 44 the data processing system 4, the above mentioned reproducing system 2, CPU 5 and the voice signal processing system 3, excluding the display section 27, which may for example be an LCD. Within the main body of the apparatus 44 may be loaded a disc cartridge accommodating therein a CD-ROM on which are recorded data such as those of a dictionary or an encyclopedia. Referring to Figs. 2 and 3, a key operating section 45, on which are arrayed various operating keys, such as an alphabet key, cursor shift key 42 or a selection key 43 for selecting the items to which the cursor has been shifted, is rotatably mounted by a pivot shaft on the side of the main body 44 facing the outside when a cover is applied to the main body 44. On the reverse side of the key operating section 45 opposite to the side provided with the keys, there is provided a cartridge holder 46 into and out of which may be introduced or removed the disc cartridge containing the CD-ROM. The cartridge holder 46 is supported by the main body 44 so as to be rotated to follow the rotation of the key operating section 45. A cover member 47 for overlying the key operating section 45 to cover the upper side of the main body 44 is rotatably mounted by means of a pivot shaft 48.

On an inner surface of the cover member 47, that is the side facing the key operating section 45 when the main body 44 is covered as shown in Fig. 2, there is provided the display section 27 for displaying the information, such as the character information, read out from the CD-ROM.

It is noted that the cover member 47 fitted with the display section 27 is supported by the main body 44 in such a manner that, during use of the reproducing apparatus 40, the cover member 47 may be rotated to and maintained at a desired rotational position in which the surface of the key operating section 45 is exposed and the display screen of the display section 27 may be viewed easily. During non-use of the reproducing apparatus, the cover member 47 may be closed on the key operating section 45 into an overall compact rectangular form to facilitate handling or transport.

With the above described reproducing apparatus 40, which is provided with the above described signal processing system and adapted to read out and reproduce data recorded on the CD-ROM for display on the display section, the portions of the reproducing apparatus for a disc which are used as a man-machine interface for data processing and display are not in need of strict timing processing and hence may be processed as the main routine, while the remaining operation may be performed by an interrupt routine, so that the overall signal processing may be taken charge of by the sole CPU 5. Also in consideration that software control is performed between the driving CPU of the present apparatus and the host CPU of a commercially available microcomputer system provided outside the present apparatus, the code system between the command packet and the status is utilized in the bus line system interconnecting these CPUs. When the present apparatus is desired to be controlled from an external host, the main routine on the drive CPU side of the present system is replaced by HALT commands so that the present system may be used by the host CPU only by starting the bus line control routine.

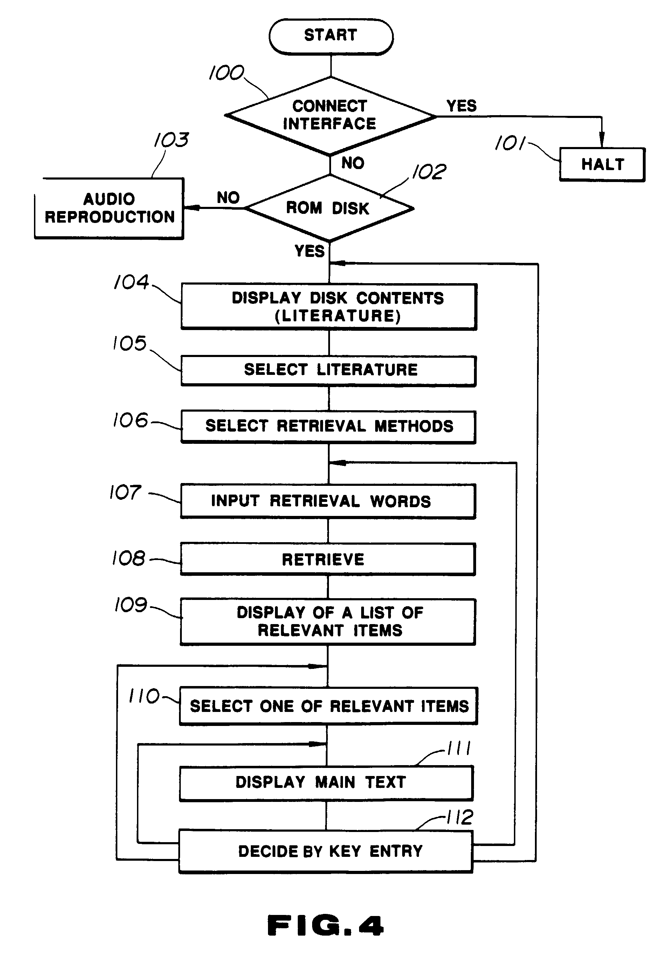

The operation of the main routine of the CPU 5 is explained with reference to a flow chart shown in Fig. 4.

First, in step 100, it is determined if the external interface is connected, or in circuit, that is, if the switch 29 has been turned on. If the switch 29 has been turned on, that is if the external interface is in circuit, the program proceeds to step 101 where the CPU 5 is reset and the so-called HALT operation is performed under the instructions from the interface. If the switch 29 is off, the program proceeds to step 102.

In step 102, it is determined if the optical disc loaded in this reproducing apparatus 40 is the CD-ROM disc, such as dictionary or encyclopedia. If the result is NO, the program proceeds to step 103 where it is determined that the disc is the optical disc for music and the above mentioned audio signal processing is performed. If the result is NO, the program proceeds to step 104.

In step 104, the data signals read-out from the loaded disc are processed, under the assumption that the data signals read out from the loaded disc is the ROM disc, and the display of the literatures recorded on the disc is made on the display section 27 (display of the contents). The program then proceeds to step 105.

In step 105, a desired one of the displayed literatures is selected by shifting the cursor with the aid of the cursor shift key 42 and then using the selection key 43. The program then proceeds to step 106.

In step 106, the method of retrieving the desired one of the displayed literatures is selected. In step 107, a retrieve word designating the selected retrieve method is entered by alphabet key 41 on keyboard 31. The program then proceeds to step 108.

In step 108, the designated retrieve operation is performed. The program then proceeds to step 109.

In step 109, the above retrieval is performed to display a table of the relevant items on the display section 27. The program then proceeds to step 110.

In step 110, a desired one of the items is selected from the displayed relevant items. The program then proceeds to step 111.

In step 111, the text of the selected item is displayed before the program proceeds to step 112.

In step 112, when it is desired to make a scrolling of the displayed text, the program is reverted to step 111 to perform text display in accordance with the scroll display, by a corresponding key operation on keyboard 31. When it is desired to view other items, the program is reverted to step 110 to re-select the desired item. When it is desired to select some other word of the same literature, the program is reverted to step 107 for re-entry of the retrieve word. When it is desired to view some other literature, the program is reverted to step 104 to re-display the record data.

Since the above-mentioned main routine operation is performed by user's key entry, the remaining signal processing operations, such as servo control, signal processing, data correction, key entry or bus line control, are performed as interrupt subroutines. That is, no matter whether the main routine is in the stand-by state or being executed, an interrupt demand signal requesting an interrupt at every 13.3 millisecond is supplied to the CPU 5 to cause an interrupt subroutine to be executed compulsorily.

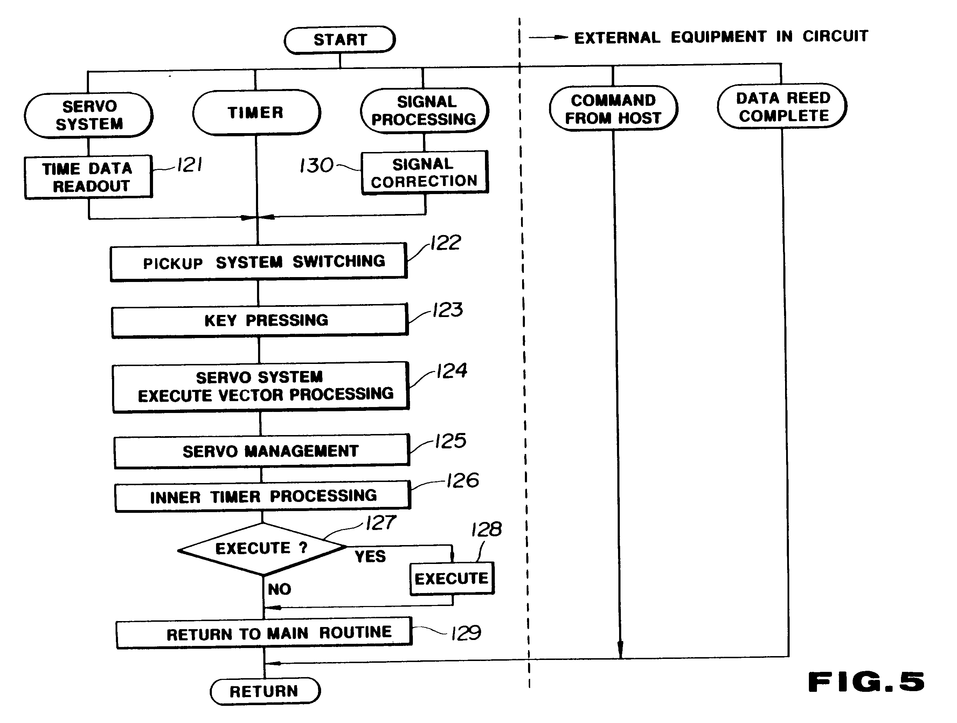

The operation of the interrupt subroutine is explained by referring to a flowchart shown in Fig. 5.

In this interrupt subroutine, time data are read out at step 121 for detecting at which position the optical pickup 7 is on the disc. The program then proceeds to step 122.

In step 122, the processing for the pickup system is performed, before the program proceeds to step 123.

In step 123, the key-pressing operation is performed, before the program proceeds to step 124.

In step 124, the servo system executing vector operation is performed, before the program proceeds to step 125.

In step 125, servo supervision is performed, before the program proceeds to step 126.

In step 126, inner timer processing is performed, before the program proceeds to step 127.

In step 127, it is determined if the execute operation is to be performed. If the result is YES, the program proceeds to step 128 where the execute operation is performed, after which the program proceeds to step 129. If the result is NO, the program proceeds directly to step 129.

In step 129, the program reverts to the main routine to resume the processing.

In the case of the time processing operation, the program prosecutes the operation from 122 to step 129. In the case of the signal processing, the processing such as signal correction is performed at step 130. Subsequently, the program prosecutes the operation from step 122 to step 129.

When the external interface is connected, a halt processing is performed in the main routine, as mentioned previously. In this case, the operation from steps 121 to 130 is similarly executed responsive to timer interrupt. There are also executed a post-processing following data readout and host commands given from the host by means of the above mentioned interface.

It will be seen from the foregoing that the present invention provides a reproducing apparatus for a disc in which, with the use of a sole CPU, the data retrieval operation is executed as a main routine and the reproducing operation for the disc is executed as a subroutine by timer interrupt. In this manner, the area set aside for CPU may be reduced as compared to the conventional system employing plural CPUs, while the size of the base plate or the equipment and hence the costs may also be reduced.

In addition, a hybrid code system processing resulting from the use of plural CPUs becomes unnecessary to facilitate software formulation.

## Claims

1. A disc reproducing apparatus including keyboard and display means (41-43;27), for retrieving and displaying data read out from the disc,
**characterized in that**
a single CPU (5) is provided for performing processings related to the man-machine interface for data-processing and display as a main routine (100-112) and processings for controlling the reproduction from the disc as a sub-routine (122-129) initiated by a timer interrupt, the subroutine including at least servo-control of a reproducing head.

2. The apparatus according to claim 1, wherein said sub-routine is performed in such a manner that an interrupt demand signal which demands execution of an interrupt operation is supplied to said CPU (5) at predetermined time intervals to cause the interrupt operation to be executed compulsorily.

3. The apparatus according to claim 1, wherein said sub-routine includes at least servo-control of an optical head with a feed mechanism therefore and disc-rotating driving means, processing of signals read out from the optical head, data correction, key input processing and bus line control.

4. The apparatus according to claim 1, wherein said main routine is performed in such a manner that it is first determined, if an external interface is connected to said apparatus and, if the result is affirmative, the CPU is reset and a HALT-operation is performed under instructions from the external interface.

5. The apparatus according to one of the claims 1 to 4, wherein said disc is an optical disc (1) from which character, or letter data, or image data recorded thereon are read out by an optical pick-up (7) to reproduce the data recorded on the optical disc and the read-out data are retrieved, comprising:
- a main body section including the optical pick-up (7), a signal processing section (8) for processing signals read out from said optical pick-up (7), disc-rotating driving means (13) for rotationally driving the optical disc and driving the optical pick-up (7), a control section being constituted by said single CPU (5) for controlling the feed mechanism for said optical pick-up (7) and for controlling input means (31) and adapted for controlling the various operations by said control section on the basis of signals input by said input means (31) to effect data retrieval from said optical disc (1) and
- a display section (25, 27) connected to said CPU (5) for displaying data recorded on said optical disc.

6. The apparatus according to claim 5, wherein said display section (27) is rotatably mounted on said main body section.

## Patentansprüche

1. Plattenwiedergabegerät mit einer Tastatur und einer Anzeige (41-43; 27) zum Wiederauffinden und Anzeigen von von der Platte ausgelesenen Daten,
**dadurch gekennzeichnet,** daß eine einzige CPU (5) vorgesehen ist zur Durchführung von Verarbeitungsschritten, die sich auf die Mensch-Maschine-Schnittstelle beziehen, zur Datenverarbeitung und Anzeige als Hauptprogramm (100-112), und Verarbeitungsschritten zum Steuern der Wiedergabe von der Platte als Unterprogramm (122-129), das durch einen Interrupt eines Zeitgebers initiiert wird, wobei das Unterprogramm zumindest die Servosteuerung eines Wiedergabekopfs umfaßt.

2. Gerät nach Anspruch 1, bei dem das Unterprogramm auf eine solche Weise ausgeführt wird, daß ein Interrupt-Anforderungssignal, das die Ausführung einer Interrupt-Operation anfordert, der CPU (5) in vorbestimmten Zeitintervallen zugeführt wird, um zwangsweise die Ausführung der Interrupt-Operation zu bewirken.

3. Gerät nach Anspruch 1, bei dem das Unterprogramm zumindest die Servosteuerung eines optischen Kopfs mit einem Vorschubmechanismus für diesen und eines Platten-Drehantriebs, das Verarbeiten von vom optischen Kopf ausgelesenen Signalen, die Datenkorrektur, die Verarbeitung der Tasteneingaben und die Busleitungs-Steuerung umfaßt.

4. Gerät nach Anspruch 1, bei dem das Hauptprogramm auf eine solche Weise ausgeführt wird, daß zuerst festgestellt wird, ob eine externe Schnittstelle an das Gerät angeschlossen ist, und wenn das Ergebnis positiv ist, die CPU zurückgesetzt wird und eine HALT-Operation gemäß den Befehlen von der externen Schnittstelle durchgeführt wird.

5. Gerät nach einem der Ansprüche 1 bis 4, bei dem die Platte eine optische Platte (1) ist, von der auf dieser aufgezeichnete Zeichen oder Buchstabendaten oder Bilddaten durch einen optischen Aufnehmer (7) ausgelesen werden, um die auf der optischen Platte aufgezeichneten Daten wiederzugeben, und die Auslesedaten wiederaufgefunden werden, mit:
- einem Hauptkörperabschnitt, der den optischen Aufnehmer (7), einen Signalverarbeitungsabschnitt (8) zum Verarbeiten von vom optischen Aufnehmer (7) ausgelesenen Signalen, einen Platten-Drehantrieb (13) zum rotatorischen Antreiben der optischen Platte und zum Antreiben des optischen Aufnehmers (7), und einen aus der einzigen CPU (5) gebildeten Steuerabschnitt zum Steuern des Vorschubmechanismus für den optischen Aufnehmer (7) und zum Steuern von Eingabemitteln (31) enthält, und der zum Steuern der verschiedenen Operationen durch den Steuerabschnitt auf der Basis von durch die Eingabemittel (31) eingegebenen Signalen ausgelegt ist, um das Wiederauffinden von Daten von der optischen Platte (1) zu bewirken, und
- einem mit der CPU (5) verbundenen Anzeigeabschnitt (25, 27) zum Anzeigen von Daten, die auf der optischen Platte aufgezeichnet sind.

6. Gerät nach Anspruch 5, bei dem der Anzeigeabschnitt (27) drehbar auf dem Hauptkörperabschnitt befestigt ist.

## Revendications

1. Appareil de reproduction de disque comprenant un clavier et un dispositif d'affichage (41 à 43 ; 27), pour récupérer et afficher des données extraites du disque,
caractérisé en ce que
un CPU unique (5) est fourni pour réaliser des traitements liés à une interface homme-machine pour traiter des données et les afficher par un programme principal (100 à 112) et des traitements pour commander la reproduction du disque par un sous-programme (122 à 129) lancé par une interruption du dispositif de temporisation, le sous-programme comprenant au moins une commande d'asservissement d'une tête de reproduction.

2. Appareil selon la revendication 1, dans lequel ledit sous-programme est réalisé de manière à ce qu'un signal de demande d'interruption qui demande l'exécution d'une opération d'interruption soit appliqué audit CPU (5) à des intervalles de temps prédéterminés pour provoquer obligatoirement l'exécution du traitement d'interruption.

3. Appareil selon la revendication 1, dans lequel ledit sous-programme comprend au moins une commande d'asservissement d'une tête optique avec un mécanisme d'alimentation de celle-ci et un dispositif de commande de rotation du disque, un traitement des signaux extraits par la tête optique, une correction de données, un traitement d'activation de touche et une commande de ligne de bus.

4. Appareil selon la revendication 1, dans lequel ledit programme principal est réalisé de manière à ce qu'on détermine d'abord si une interface externe est raccordée audit appareil et, si le résultat est affirmatif, le CPU est réinitialisé et le traitement d'arrêt est réalisé sous la commande des instructions de l'interface externe.

5. Appareil selon l'une quelconque des revendications 1 à 4, dans lequel ledit disque est un disque optique (1) à partir duquel des caractères, ou des données de lettre, ou des données d'image enregistrées sur celui-ci sont extraites par une tête de lecture optique (7) pour reproduire les données enregistrées sur le disque optique et les données extraites sont récupérées, comprenant :
- une section de corps principal comprenant la tête de lecture optique (7), une section de traitement de signal (8) pour traiter des signaux extraits par ladite tête optique (7), un dispositif de commande de rotation de disque (13) pour mettre en rotation le disque optique et commander la tête de lecture optique (7), une section de commande étant constituée par ledit CPU unique (5) pour commander le mécanisme d'alimentation de ladite tête de lecture optique (7) et adapté pour commander un dispositif d'entrée (31) et pour commander les diverses opérations par ladite section de commande sur la base des signaux introduits par ledit moyen d'entrée (31) pour effectuer une récupération de données à partir dudit disque optique (1) et
- une section d'affichage (25, 27) raccordée audit CPU (5) pour afficher des données enregistrées sur ledit disque optique.

6. Appareil selon la revendication 5, dans lequel ladite section d'affichage (27) est montée de façon tournante sur ladite section de corps principal.
